# FASCICULE DE BREVET EUROPEEN

(11) **EP 2 691 224 B1**
(45) Date de publication et mention de la délivrance du brevet: **18.02.2015**
(21) Numéro de dépôt: 12717411.8
(22) Date de dépôt: 29.03.2012
(51) Int. Cl.: B29C 47/28

(54) **TÊTE D'EXTRUSION ANNULAIRE POUR GAINE TUBULAIRE HOMOGÈNE ET PROCÉDÉ D'EXTRUSION**
RINGFÖRMIGER EXTRUDERKOPF FÜR EINE EINHEITLICHE ROHRFÖRMIGE HÜLLE UND EXTRUSIONSVERFAHREN
ANNULAR EXTRUSION HEAD FOR A UNIFORM TUBULAR SHEATH AND EXTRUSION PROCESS

(30) Priorité: 29.03.2011 FR 1152610
(43) Date de publication de la demande: 05.02.2014
(73) Titulaire: Technip France, 92400 Courbevoix (FR)
(72) Inventeur: MORAND, Michel Paul, F-76480 Duclair (FR)
(74) Mandataire: Gendron, Vincent Christian
(86) Numéro de dépôt international: PCT/FR2012/050666
(87) Numéro de publication internationale: WO 2012/131264

(56) Documents cités:
- WO-A1-2010/072955
- US-A1- 2005 046 073

## Description

La présente invention se rapporte à une tête d'extrusion annulaire permettant d'extruder une gaine tubulaire en matériau polymère pour fabriquer des conduites tubulaires flexibles destinées au transport des hydrocarbures.

De telles conduites tubulaires flexibles sont notamment destinées à une exploitation pétrolière en mer. Ces conduites peuvent être immergées à de grandes profondeurs et doivent donc résister à des pressions et des tensions élevées. Elles sont notamment décrites dans les documents normatifs API 17J « Spécification for Unbonded Flexible Pipe » et API RP17B « Recommended Practice for Flexible Pipe » établis par l'American Petroleum Institute.

Les conduites tubulaires flexibles comportent habituellement une gaine interne de pression en matériau polymérique assurant l'étanchéité vis-à-vis du fluide transporté, et des couches de renfort entourant la gaine de pression et assurant notamment la reprise des efforts liés à la pression du fluide transporté et à la tension axiale appliquée à la conduite. La conduite peut aussi comporter d'autres gaines en matériau polymérique, notamment une gaine externe de protection, et une ou plusieurs gaines intermédiaires entourant la gaine interne de pression. La gaine de pression, les gaines intermédiaires et la gaine externe sont généralement réalisées par extrusion à chaud d'un matériau polymère thermoplastique.

Dans le cas des conduites flexibles destinées à véhiculer des hydrocarbures à haute température, typiquement entre 100°C et 130°C, voire 150°C et plus, la gaine de pression doit être réalisée avec un matériau polymère résistant à la température et à la pression, ce qui conduit généralement à choisir un polymère présentant une masse moléculaire élevée.

Lorsque la température de service est comprise entre 100°C et 130°C, la gaine de pression est généralement réalisée avec polymère fluoré, typiquement un polymère à base de PVDF (« Polyvinylidene Fluoride » en langue anglaise), tel que décrit par exemple dans les documents US4706713 et EP1717271. Pour des températures supérieures à 130°C, la gaine de pression peut notamment être réalisée dans un matériau à base de PPS (« Polyphenylenesulfide » en langue anglaise) tel que décrit dans le document WO2007/096589, ou bien à base de PEEK (« Polyetheretherketone » en langue anglaise) tel que décrit dans le document WO2008/119677.

Ainsi, s'agissant des matériaux polymères servant à réaliser les gaines de la conduite, l'augmentation de leurs performances nécessite d'accroître la masse moléculaire des composés les constituant. Partant, leur viscosité d'application s'en trouve augmentée, ce qui pose des problèmes de pression d'extrusion.

Afin d'abaisser les viscosités apparentes des polymères mis en oeuvre, précisément pour diminuer ces pressions d'extrusion, on additionne au matériau polymère un additif permettant de faciliter son écoulement à travers la tête d'extrusion. De tels additifs sont généralement appelés « processing aid » par l'homme du métier.

Les têtes d'extrusion comprennent un mandrin, et un fourreau venant coiffer coaxialement le mandrin pour former une chambre annulaire entre ledit fourreau et ledit mandrin. La chambre annulaire présente une extrémité amont fermée vers laquelle le fourreau et le mandrin sont reliés ensemble et à l'opposé, une extrémité aval ouverte où le fourreau et le mandrin sont libres l'un par rapport à l'autre. Par ailleurs, la chambre annulaire présente une ouverture d'entrée radiale à travers laquelle est injecté sous pression le matériau polymère préalablement porté à l'état fondu à travers une vis chauffante.

Différents mandrins sont envisageables pour extruder les gaines des conduites flexibles. On connaît notamment les mandrins de type « porte manteau » ou « queue de carpe » (« fish tail » en langue anglaise). Avec ce type de mandrin, la chambre annulaire, présente des canaux qui s'étendent dans les deux sens circulaires opposés, depuis l'ouverture d'entrée radiale et qui se rejoignent à l'opposé dans une zone de jonction. Ainsi, le polymère à l'état fondu forme deux écoulements circonférentiels opposés de matériau polymère à l'état fondu qui se rejoignent dans ladite zone de jonction. Le matériau polymère à l'état fondu est également entraîné axialement, à partir des canaux vers l'extrémité aval, pour former une nappe cylindrique et en quittant la chambre annulaire, pour former la gaine tubulaire.

Tandis que le matériau polymère à l'état fondu est entraîné dans la chambre annulaire de l'extrémité amont vers l'extrémité aval, il se forme un joint de ressoudure dans la gaine tubulaire au niveau de la zone de jonction.

Les additifs d'écoulement sont des polymères de faible masse moléculaire ajoutés à des teneurs de quelques pour cent dans le polymère de base et qui sont non compatibles avec lui. Aussi, durant l'extrusion ces additifs migrent vers la surface du matériau polymère en fusion et facilitent son glissement contre les parois.

Lorsque les matériaux polymères de base présentent des masses moléculaires élevées, il est parfois nécessaire d'y incorporer une proportion importante d'additif d'écoulement, par exemple 1% voir 2 % de la masse totale.

Or, il s'avère que la gaine tubulaire réalisée avec de tels pourcentages d'additif d'écoulement est fragilisée au niveau du joint de ressoudure et peut se fendre précisément le long du joint.

En effet, les additifs tendent à migrer à la surface du matériau polymère et cette surface est plus importante au niveau de la zone de jonction de la chambre annulaire, car cette dernière présente une surface de parois supérieure au reste de la chambre annulaire. Et, c'est précisément à cet endroit que les canaux se rejoignent. Aussi, la concentration en additif d'écoulement est plus importante au niveau de la zone de jonction et partant, dans le joint de ressoudure. Cela concourt à sa fragilisation. Aussi, il a été imaginé de fragmenter et de disperser le matériau polymère en fusion, notamment au niveau du joint de ressoudure en interposant des grilles en travers de la chambre annulaire. On pourra se référer au document WO 2010/072 955, dans lequel il est divulgué une tête d'extrusion comportant trois grilles successives pour disperser les additifs d'écoulement.

Bien qu'elles parviennent à disperser l'additif d'écoulement et permettent d'obtenir une gaine tubulaire homogène, notamment au niveau du joint de ressoudure, ces grilles tendent à faire augmenter la pression d'extrusion dans la tête, et par conséquent, la taille et les capacités des moyens à mettre en oeuvre.

Aussi, un problème qui se pose et que vise à résoudre la présente invention, est de fournir une tête d'extrusion qui permette non seulement d'extruder des matériaux polymères à haute masse moléculaire pour former des gaines tubulaires présentant un joint de ressoudure homogène avec l'ensemble de la gaine et ne risquant pas de se fendre, mais aussi, qui puissent être réalisées à un coût avantageux ne nécessitant pas de moyens autres que les moyens existants.

Dans ce but, et selon un premier objet, la présente invention propose une tête d'extrusion pour former une gaine tubulaire en matériau polymère, ladite tête d'extrusion comprenant une chambre annulaire présentant une extrémité amont fermée et une extrémité aval ouverte, ladite extrémité amont comprenant une ouverture d'entrée radiale pour pouvoir injecter sous pression un matériau polymère à l'état fondu chargé d'un additif d'écoulement, ladite chambre annulaire comprenant deux canaux qui s'étendent dans des sens circulaires opposés à partir de ladite ouverture d'entrée radiale et une zone de jonction opposée à ladite ouverture d'entrée radiale dans laquelle se rejoignent lesdits deux canaux, de manière à pouvoir former d'une part deux écoulements circonférentiels de matériau polymère à l'état fondu se rejoignant dans ladite zone de jonction, tandis que ledit additif d'écoulement se concentre dans ladite zone de jonction, et d'autre part un écoulement axial vers ladite extrémité aval permettant de former ladite gaine tubulaire, tandis que la jonction desdits deux écoulements forme un joint de ressoudure concentré en additif d'écoulement dans ladite gaine tubulaire, ladite chambre annulaire comprenant en outre des moyens mécaniques pour abaisser la concentration de l'additif d'écoulement dans ledit joint de ressoudure. Selon l'invention, lesdits moyens mécaniques comprennent un conduit d'extraction débouchant dans ladite zone de jonction, pour pouvoir extraire de ladite zone de jonction une fraction dudit matériau polymère à l'état fondu concentré en additif d'écoulement, par quoi la concentration de l'additif d'écoulement dans ledit joint de ressoudure est abaissée.

Ainsi, une caractéristique de l'invention réside dans l'extraction d'une fraction du matériau polymère à l'état fondu, laquelle fraction est à la fois concentrée en additif d'écoulement et située au niveau de la zone de jonction, à partir de laquelle se forme le joint de ressoudure. De la sorte, l'invention vise à non pas disperser l'additif d'écoulement du joint de ressoudure dans l'ensemble de l'épaisseur de la gaine tubulaire, mais à le soustraire du joint d'écoulement. Aussi, l'écoulement des nappes du matériau polymère à l'état fondu est-il facilité dans la chambre annulaire et la surconcentration qui apparaissait au niveau du joint de ressoudure est-elle supprimée. Par conséquent, le matériau polymère de la gaine est homogène et l'additif d'écoulement est réparti de manière homogène dans l'épaisseur de la gaine tubulaire.

Selon un mode de mise en oeuvre de l'invention particulièrement avantageux, lesdits canaux sont respectivement divisés en un canal amont opposé à ladite extrémité aval et un canal aval situé vers ladite extrémité aval, lesdits canaux amont et aval communiquant l'un avec l'autre. Ainsi, chacun des canaux qui s'étendent dans des sens circulaires opposés à partir de l'ouverture d'entrée radiale, est divisé en deux canaux parallèles, un canal amont et un canal aval. De la sorte, le matériau polymère à l'état fondu s'écoule à travers les canaux parallèles, depuis l'ouverture d'entrée radiale jusqu'à la zone de jonction, en formant un écoulement circonférentiel aval et un écoulement circonférentiel amont, et l'additif d'écoulement vient déjà se concentrer dans l'écoulement circonférentiel amont avant de rejoindre la zone de jonction. Il s'avère que l'additif d'écoulement tend non pas à être entraîné axialement vers l'extrémité aval de la chambre annulaire mais bien plutôt à l'opposé, et à venir s'accumuler à l'intérieur du canal amont. On expliquera plus en détail dans la suite de la description, la façon dont les canaux amont et aval communiquent l'un avec l'autre.

En outre, préférentiellement, lesdits canaux amont et aval, présentent respectivement des sections droites de canal amont et de canal aval, et ladite section droite de canal amont croît de ladite ouverture d'entrée radiale vers ladite zone de jonction opposée, tandis que ladite section droite de canal aval décroît. Ainsi, le matériau polymère à l'état fondu est essentiellement contenu à l'intérieur du canal aval dès après l'injection à travers l'ouverture d'entrée radiale, la section de l'écoulement circonférentiel aval étant bien supérieur à la section de l'écoulement circonférentiel amont, tandis qu'au fur et à mesure que le matériau polymère à l'état fondu s'achemine vers la zone de jonction, la section de l'écoulement circonférentiel amont s'accroît au détriment de la section de l'écoulement circonférentiel aval. En effet, l'additif d'écoulement s'accumule dans l'écoulement circonférentiel amont au fur et à mesure que l'on se rapproche de la zone de jonction, et par conséquent la section du canal amont doit s'accroître. S'agissant du canal aval, le matériau polymère à l'état fondu s'en échappe axialement vers l'extrémité aval au fur et à mesure que l'on se rapproche de la zone de jonction. Aussi, sa section doit naturellement décroître de l'ouverture d'entrée radiale vers la zone de jonction.

De plus, ladite zone de jonction présente une portion amont dans laquelle débouchent les canaux amont et une portion aval dans laquelle débouche les canaux aval.

Selon une première variante de réalisation particulièrement avantageuse, ledit conduit d'extraction débouche en aval de ladite zone de jonction. De la sorte, le matériau polymère à l'état fondu migre tout d'abord circonférentiellement vers la zone de jonction où s'accumule de l'additif d'écoulement, puis axialement vers l'extrémité aval, et une fraction du matériau polymère fondu emprunte le conduit d'extraction pour être soustrait à la masse du matériau polymère fondu qui formera le joint de ressoudure.

Selon une seconde variante de réalisation préférée, ledit conduit d'extraction débouche dans ladite portion amont de ladite zone de jonction. Ainsi, l'écoulement circonférentiel amont constitué de matériau polymère à l'état fondu enrichi en additif d'écoulement s'achemine dans la portion amont de la zone de fonction et partant, emprunte directement le conduit d'extraction pour être évacué à l'extérieur de la chambre annulaire.

En outre, selon un mode de réalisation particulier de l'invention, ladite chambre annulaire comprend un déflecteur situé en amont dudit conduit d'extraction de manière à guider ladite fraction dudit matériau polymère à l'état fondu concentré en additif d'écoulement vers l'intérieur dudit conduit d'extraction. De la sorte, la fraction du matériau polymère fondu concentré en additif d'écoulement, tout en s'écoulant, rencontre le déflecteur qui oriente alors ladite fraction vers le conduit d'extraction. Aussi, la fraction du matériau polymère concentré en additif d'écoulement est-elle plus sûrement soustraite de la masse du matériau polymère fondu.

Ledit déflecteur comporte avantageusement une pièce en V présentant deux ailes opposées bordant ladite zone de jonction et une pointe orientée vers ladite extrémité aval, tandis que ledit conduit d'extraction débouche entre lesdites ailes opposées. De la sorte, la fraction du matériau polymère fondu concentré en additif d'écoulement est entraînée, de l'extrémité amont vers l'extrémité aval, entre les deux ailes opposées de la pièce en V dans laquelle elle est piégée pour ensuite être guidée vers le conduit d'extraction.

Aussi, ladite tête d'extrusion comprend un mandrin, et un fourreau venant coiffer coaxialement ledit mandrin pour former ladite chambre annulaire entre ledit fourreau et ledit mandrin, et ledit déflecteur s'étend radialement dudit mandrin jusqu'audit fourreau. Par conséquent, la chambre annulaire est obstruée localement en aval de la zone de jonction, par exemple sur une largeur sensiblement supérieure à celle de la zone de jonction, de manière à dévier le matériau polymère fondu et concentré en additif d'écoulement qui s'étend dans l'épaisseur de la zone de jonction. Les nappes de polymère fondu vont alors se rejoindre en aval du déflecteur.

Avantageusement, lesdits canaux sont formés par des rainures pratiquées dans ledit mandrin. De la sorte, une quantité substantielle de matériau polymère fondu circule dans les canaux de manière à le répartir circonférentiellement dans la chambre annulaire, tandis qu'il s'écoule axialement en nappes à partir de ces canaux dans l'épaisseur de la chambre annulaire. Avantageusement, lesdits canaux convergent l'un vers l'autre et vers ladite extrémité aval. Plus précisément, à partir de l'ouverture d'entrée radiale ils s'étendent en hélice opposée sensiblement régulière, tandis que l'angle d'hélice croit progressivement vers la zone de jonction et ils se rejoignent en pointe dans la zone de jonction vers l'extrémité aval.

De plus, ledit conduit d'extraction est ménagé sensiblement radialement dans ledit fourreau. De la sorte, le matériau polymère fondu concentré en additif d'écoulement est évacué vers l'extérieur de la tête d'extrusion.

Selon une caractéristique particulièrement avantageuse, ledit conduit d'extraction est formé d'une fente pratiquée dans ledit fourreau. Préférentiellement, ladite fente s'étend selon un plan moyen axial. De la sorte, la fraction de matériau polymère fondu qui s'écoule à une vitesse déterminée de l'amont vers l'aval au niveau de la zone de jonction, est-elle en regard du conduit d'extraction pendant un temps suffisant correspondant à la largeur de la fente divisée par la vitesse d'écoulement du matériau polymère fondu.

Selon un second objet, la présente invention propose un procédé d'extrusion pour former une gaine tubulaire en matériau polymère, ledit procédé comprenant les étapes suivantes : on fournit une chambre annulaire présentant une extrémité amont fermée et une extrémité aval ouverte, ladite extrémité amont comprenant une ouverture d'entrée radiale, ladite chambre annulaire comprenant deux canaux qui s'étendent dans des sens circulaires opposés à partir de ladite ouverture d'entrée radiale et une zone de jonction opposée à ladite ouverture d'entrée radiale dans laquelle se rejoignent lesdits deux canaux ; puis on injecte sous pression à travers ladite ouverture d'entrée radiale un matériau polymère à l'état fondu chargé d'un additif d'écoulement, de manière à former, d'une part deux écoulements circonférentiels de matériau polymère à l'état fondu se rejoignant dans ladite zone de jonction, tandis que ledit additif d'écoulement se concentre dans ladite zone de jonction, et d'autre part un écoulement axial vers ladite extrémité aval permettant de former ladite gaine tubulaire, tandis que la jonction desdits deux écoulements forme un joint de ressoudure concentré en additif d'écoulement dans ladite gaine tubulaire ; selon l'invention, on extrait de ladite zone de jonction une fraction dudit matériau polymère à l'état fondu concentré en additif d'écoulement, pour abaisser la concentration de l'additif d'écoulement dans ledit joint de ressoudure.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 est une vue schématique en coupe axiale d'une tête d'extrusion conforme à l'invention, selon un premier mode de mise en oeuvre ;
- la Figure 2 est une vue schématique de détail en coupe axiale de la tête d'extrusion illustrée sur la Figure 1 ;
- la Figure 3 est une vue schématique en perspective d'un élément de la tête d'extrusion illustrée sur la Figure 1;
- la Figure 4 est une vue schématique en perspective de détail de l'élément illustré sur la Figure 3, sous un premier angle de vue;
- la Figure 5 est une vue schématique en perspective de détail de l'élément illustré sur la Figure 3 sous un autre angle de vue ; et,
- la Figure 6 est une vue schématique en coupe axiale d'une tête d'extrusion conforme à l'invention, selon un second mode de mise en oeuvre.

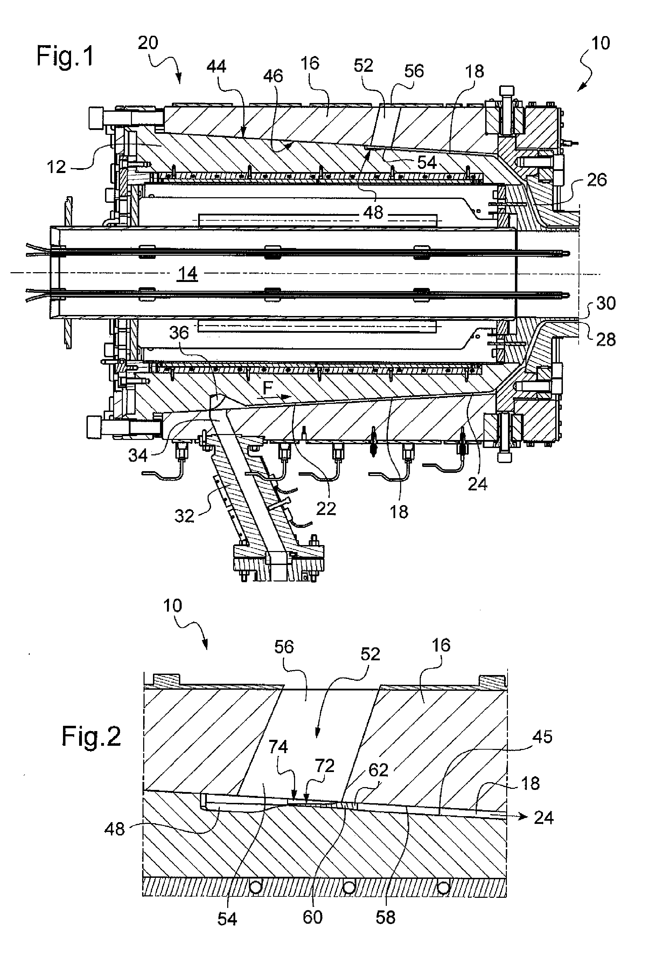

La Figure 1 illustre une tête d'extrusion 10 comprenant un mandrin 12 traversé axialement par une conduite tubulaire 14 et un fourreau 16 coiffant coaxialement le mandrin 12 en formant, dans l'entrefer, une chambre annulaire 18 de forme générale tronconique. Le mandrin 12 et le fourreau 16 sont solidaires l'un de l'autre au niveau d'une embase 20. La chambre annulaire 18 présente une extrémité amont 22 circulaire située vers l'embase 20, où le fourreau 16 et le mandrin 12 sont reliés ensemble de manière étanche, et une extrémité aval 24 prolongée par un resserrement 26 et terminée par deux lèvres coaxiales 28, 30.

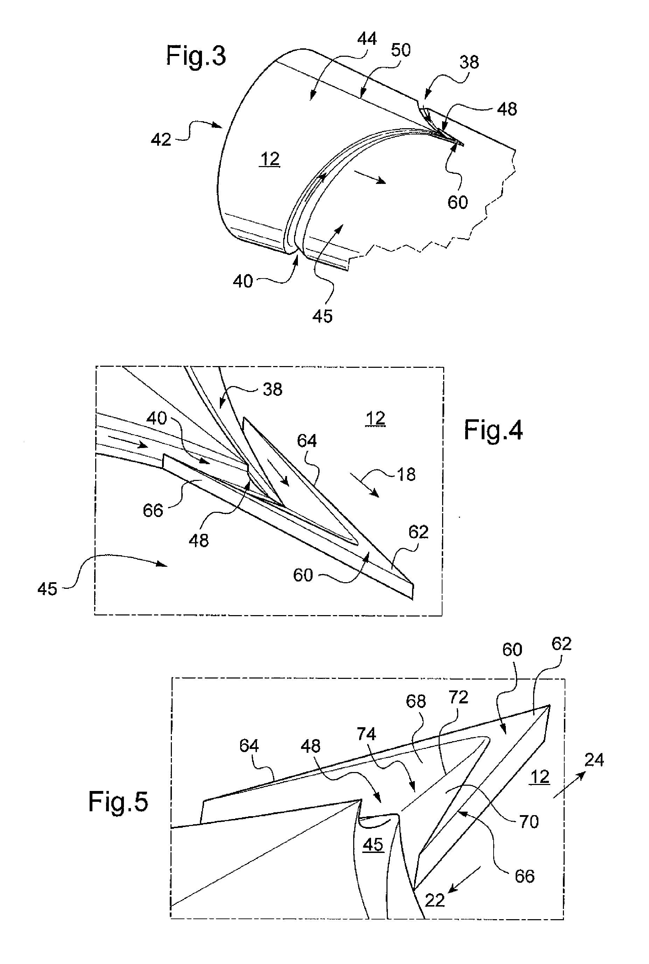

La tête d'extrusion 10 comprend un embout d'amenée 32 relié au mandrin 12 et à l'extrémité d'une vis chauffante non représentée, à l'intérieur de laquelle un matériau polymère chargé en additif d'écoulement est à l'état fondu. Le conduit d'amenée 32 débouche dans une ouverture d'entrée radiale 34 de la chambre annulaire 18. Au niveau de l'ouverture d'entrée radiale 34, le mandrin 12 présente une rainure d'entrée 36. La rainure d'entrée 36 s'étend, à partir de l'ouverture d'entrée radiale 34, en deux rainures opposées 38, 40 formées en demi-hélices inverses à pas variable autour du mandrin comme l'illustre la Figure 3 montrant le mandrin 12 en perspective. Le mandrin 12 présente une partie arrière 42 apte à former l'embase 20 avec le fourreau 16 et une surface arrière tronconique 44 délimitée par les deux rainures opposées 38, 40. Contre cette surface arrière tronconique 44 vient en contact de manière étanche, une surface tronconique arrière correspondante 46 du fourreau 16. Par contre, à l'opposé de la surface arrière tronconique 44 par rapport aux rainures opposées 38, 40, s'étend une surface avant tronconique libre 45. Ainsi, les deux rainures opposées 38, 40 forment des canaux qui s'étendent respectivement dans deux sens circulaires opposés à partir de l'ouverture d'entrée radiale 32 et de la rainure d'entrée 36, et qui se rejoignent dans une zone de jonction 48 opposée à l'ouverture d'entrée radiale 34. La zone de jonction 48 est décalée axialement par rapport à la rainure d'entrée 36, et le pas des rainures opposées 38, 40 s'accroît à mesure qu'on se rapproche de la zone de jonction 48, de part et d'autre d'une génératrice 50 du mandrin 12, laquelle génératrice est diamétralement opposée à l'ouverture d'entrée radiale 34. On observera également que la profondeur des rainures opposées 38, 40 diminue à mesure que l'on se rapproche de la zone de jonction 48.

Sur la Figure 1, en coupe axiale, on retrouve la zone de jonction 48 où les deux rainures opposées 38, 40 se rejoignent. Au surplus, le fourreau 16 présente une fente axiale 52 formant un conduit d'extraction et qui débouche d'une part à l'une de ses extrémités 54, dans la zone de jonction 48 et d'autre part à l'autre de ses extrémités 56 en dehors du fourreau 16. Cette fente axiale 52 s'étend sensiblement radialement vers l'extérieur du fourreau 16. On retrouve en détail sur la Figure 2 la fente axiale 52 et la zone de jonction 48. Le fourreau 16 présente une surface interne tronconique 58, qui s'étend en regard et à distance de la surface libre 45 du mandrin 12. Par ailleurs, la chambre annulaire 18 comporte un déflecteur 60 présentant une extrémité avant en pointe 62 orientée vers l'extrémité aval 24. Ce déflecteur est constitué d'une pièce en V que l'on va décrire plus en détail et qui s'étend radialement de la surface libre 45 du mandrin 12 à la surface interne tronconique 58 en obstruant localement la chambre annulaire 18, et axialement, de l'aval de la fente axiale 52 vers l'amont en bordant la zone de jonction 48.

On retrouve en détail sur la Figure 4, le déflecteur 60 constitué d'une pièce en V solidaire de la surface libre 45 du mandrin 12 et qui présente deux ailes opposées 64, 66 bordant la zone de jonction 48 et s'étendant partiellement et respectivement le long des deux rainures opposées 38, 40 où elles débouchent dans la zone de jonction 48. Les ailes opposées 64, 66 tout comme l'extrémité avant en pointe 62 de la pièce en V 60, s'étendent radialement de la surface libre 45 du mandrin 12 jusqu'à la surface interne tronconique 58 du fourreau 16 non représentée sur la Figure 4.

On retrouve sur la Figure 5 la pièce en V 60 en perspective sous un autre angle de vue où les deux ailes 64, 66 s'étendent vers l'avant du plan de la Figure tandis que son extrémité avant en pointe 62 s'étend en arrière du plan. Par ailleurs, les ailes 64, 66 présentent respectivement deux rampes intérieures 68, 70 qui se rejoignent selon une ligne d'intersection 72 en formant un sillon dans le fond 74 de la pièce en V, ladite ligne d'intersection 72 étant comprise dans un plan axial du mandrin 12 et s'étendant de l'amont vers l'aval et de la surface libre 45 vers la surface interne tronconique 58.

On observera sur la Figure 2 que l'extrémité 54 de la fente axiale 52 débouche en regard du fond 74 de la pièce en V 60 et sensiblement parallèlement à la ligne d'intersection 72 entre les deux rampes intérieures 68, 70.

On se reportera tout d'abord sur la Figure 1, afin de décrire le cheminement d'un matériau polymère à l'état fondu chargé en additif d'écoulement. On rappellera que lesdits additifs d'écoulement comprennent des matériaux de faible masse moléculaire, chimiquement et physiquement incompatibles avec le polymère de base utilisé pour réaliser la gaine tubulaire et qui vont avoir tendance à migrer vers la surface du matériau polymère à l'état fondu et diminuer les efforts de frottement à la paroi. La viscosité intrinsèque du matériau polymère à l'état fondu demeure la même, mais son cheminement à travers la tête d'extrusion 10 est facilité car les efforts de frottement à la paroi sont diminués.

Ainsi, le matériau polymère à l'état fondu est injecté sous pression à travers l'ouverture d'entrée radiale 34 et il s'achemine dans la rainure d'entrée 36. L'additif d'écoulement a été préalablement mélangé de manière homogène au matériau polymère à un taux compris entre 1% et 3 %, par exemple 2%. Aussi, lorsqu'il pénètre dans la chambre annulaire 18, la concentration en additif d'écoulement dans la masse du matériau polymère à l'état fondu est homogène. À partir de la rainure d'entrée 36, le matériau polymère à l'état fondu va s'écouler à la fois axialement de l'extrémité amont 22 vers l'extrémité aval 24 selon la flèche F, mais aussi circonférentiellement dans les deux rainures opposées 38, 40 illustrées sur la Figure 3. Aussi, les deux écoulements de matériau polymère à l'état fondu respectivement dans les rainures opposées 38, 40 convergent et se rejoignent dans la zone de jonction 48 tandis que le matériau s'écoule également axialement à partir des rainures entre la surface libre 45 tronconique du mandrin 12 et la surface interne tronconique 58 du fourreau formant la chambre annulaire 18.

Au niveau de la zone de jonction 48, ainsi que l'illustre la Figure 4, la surface de contact entre le matériau polymère à l'état fondu et la chambre annulaire 18 est plus importante que dans le reste de la chambre annulaire 18, car les rainures opposées 38, 40, s'y rejoignent. Au surplus, la section droite de ces rainures opposées 38, 40 est plus importante vers la rainure d'entrée 36 et leur profondeur diminue au fur et à mesure qu'elles se rapprochent de la zone de jonction 48. Par conséquent, la diffusion de l'additif d'écoulement à la paroi est importante vers la rainure 36 et au surplus, il se concentre au fur et à mesure du mouvement du matériau polymère fondu vers la zone de jonction 48. Aussi, une quantité plus importante d'additif d'écoulement se concentre au niveau de la zone de jonction 48. Grâce à la pièce en V 60, une fraction du matériau polymère à l'état fondu concentrée en additif d'écoulement va être emprisonnée et évacuée à travers la fente axiale 52. En effet, la fraction de matériau polymère qui s'engage en sortant des rainures opposées 48, 40 entre les deux ailes opposées 64, 66 est piégée et est guidée axialement et radialement vers la fente 52 grâce aux rampes 68, 70. Le matériau polymère à l'état fondu ainsi concentré en additif d'écoulement, s'écoule ainsi de manière continue à travers la fente axiale 52 et est déversé dans un réservoir non représenté situé à l'extérieur du fourreau 16.

Les deux écoulements du matériau polymère à l'état fondu issus respectivement des rainures opposées 48, 40 qui échappent à la portée des ailes opposées 64, 66 et qui viennent s'écouler à l'extérieur, se rejoignent en aval de l'extrémité avant en pointe 62 pour former le joint de ressoudure. Le joint de ressoudure ainsi formé est alors moins chargé en additif d'écoulement, car non seulement les flux de matériau polymère à l'état fondu en jeu sont moins concentrés en additif mais aussi, les surfaces d'écoulement sont moins importantes et partant, moins d'additif se concentre en surface du matériau.

De la sorte, le joint de ressoudure est moins chargé en additif d'écoulement que ne le sont les joints de ressoudure des gaines tubulaires obtenues avec des têtes d'extrusion selon l'art antérieur. Par conséquent, la résistance au niveau du joint de ressoudure est plus importante.

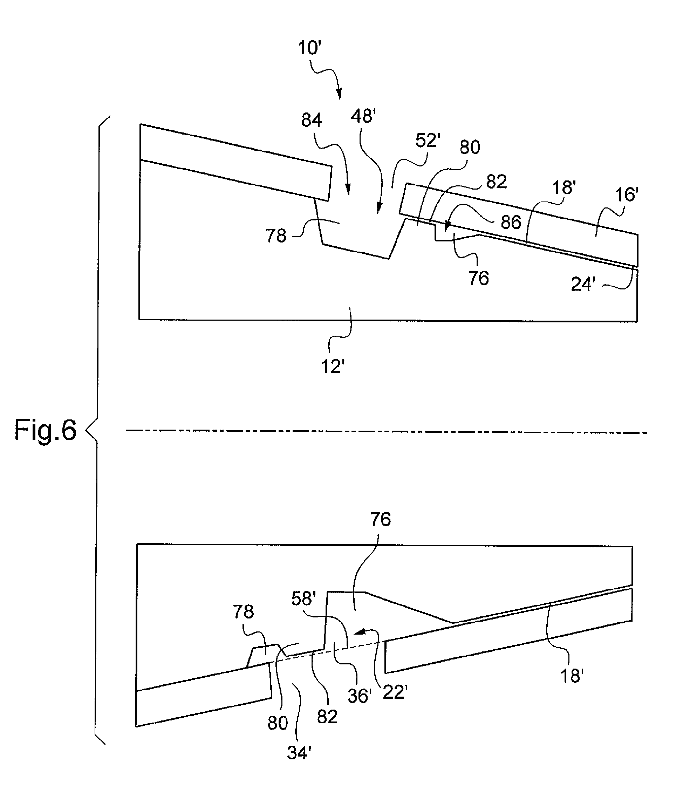

On se référera maintenant à la figure 6 illustrant une tête d'extrusion conforme à l'invention selon un second mode de mise en oeuvre. Les éléments analogues portent la même référence affectée d'un signe prime « ' » et les éléments nouveaux portent une nouvelle référence.

La tête d'extrusion 10' ainsi représentée, comprend un mandrin 12' et un fourreau 16' venant coiffer le mandrin 12' en formant, une chambre annulaire 18'. Cette dernière présente une extrémité amont 22' opposée à une extrémité aval 24'.

Le mandrin 12' présente une rainure d'entrée 36' divisée en une rainure d'entrée aval 76 et une rainure d'entrée amont 78. Ces deux rainures d'entrée amont 78 et aval 76 sont séparées l'une de l'autre par une nervure centrale 80 venant s'étendre à distance de la surface interne tronconique 58' du fourreau 16' pour former un chemin de passage circonférentiel 82 entre les deux rainures 76, 78.

Les deux rainures d'entrée amont 78 et aval 76 s'étendent ainsi à partir de l'ouverture d'entrée radiale 34', en deux doubles rainures opposées en demi-hélices inverses autour du mandrin 12' se rejoignant dans une zone de jonction 48', et formant chacune un canal amont vers l'extrémité amont 22' et un canal aval vers l'extrémité aval 24'. La zone de jonction 48' est située sur une génératrice diamétralement opposée à la génératrice coupant l'ouverture d'entrée radiale 34' et elle est décalée axialement vers l'extrémité aval 24' par rapport à l'entrée 34'. La zone de jonction 48' est alors elle-même divisée en une portion amont 84 et une portion aval 86. Ces deux canaux amont et aval, respectivement dénommés canal de drainage et canal de répartition, sont séparés l'un de l'autre par la nervure centrale 80, mais communiquent par l'intermédiaire du chemin de passage 82. Selon une direction axiale, le chemin de passage présente une longueur comprise, par exemple entre 10 mm et 60 mm et une épaisseur comprise par exemple entre 1 mm et 1,5 mm. En outre, chaque canal aval formé respectivement par la rainure opposée prolongeant la rainure d'entrée aval 76 présente une section droite sensiblement triangulaire qui se réduit à mesure que l'on se rapproche de la zone de jonction 48', tandis que chaque canal amont formé respectivement par la rainure opposée prolongeant la rainure d'entrée amont 78 présente une section droite sensiblement trapézoïdale qui s'accroît à mesure que l'on se rapproche de la zone de jonction 48'.

Les canaux amont opposés débouchent dans la portion amont 84 de la zone de jonction 48', tandis que les canaux aval opposés débouchent dans la portion aval 86.

Au surplus, le conduit l'extraction 52' débouche lui, dans la portion amont 84 de la zone de jonction 48'.

De la sorte, lorsque le matériau polymère à l'état fondu est injecté à travers l'ouverture d'entrée radiale 34', il vient s'écouler essentiellement à l'intérieur de la rainure d'entrée aval 76, et par conséquent, à l'intérieur du canal aval, et au fur et à mesure que le matériau polymère à l'état fondu s'écoule vers la zone de jonction 48', la section de l'écoulement circonférentiel amont s'accroît, tandis que la section de l'écoulement circonférentiel aval décroît. Ainsi, l'additif d'écoulement s'écoule à travers le chemin de passage 82, à l'opposé de l'extrémité aval 24', et s'accumule dans l'écoulement circonférentiel amont du canal amont au fur et à mesure que l'on se rapproche de la zone de jonction 48'. Par conséquent, le matériau polymère à l'état fondu enrichi en additif d'écoulement s'écoule ensuite dans la portion amont 84 de la zone de jonction 48' et par la même, s'échappe à travers le conduit d'extraction 52' pour être évacué vers l'extérieur de la tête d'extrusion 10'.

La présente invention vise également un procédé d'extrusion permettant de former une gaine tubulaire en matériau polymère, selon les étapes décrites ci-dessus, de manière à abaisser la concentration du joint de ressoudure en additif d'écoulement.

## Revendications

1. Tête d'extrusion (10) pour former une gaine tubulaire en matériau polymère, ladite tête d'extrusion comprenant une chambre annulaire (18) présentant une extrémité amont (22) fermée et une extrémité aval (24) ouverte, ladite extrémité amont (22) comprenant une ouverture d'entrée radiale (34) pour pouvoir injecter sous pression un matériau polymère à l'état fondu chargé d'un additif d'écoulement, ladite chambre annulaire (18) comprenant deux canaux (38, 40) qui s'étendent dans des sens circulaires opposés à partir de ladite ouverture d'entrée radiale (34) et une zone de jonction (48) opposée à ladite ouverture d'entrée radiale dans laquelle se rejoignent lesdits deux canaux (38, 40), de manière à pouvoir former d'une part deux écoulements circonférentiels de matériau polymère à l'état fondu se rejoignant dans ladite zone de jonction (48), tandis que ledit additif d'écoulement se concentre dans ladite zone de jonction, et d'autre part un écoulement axial vers ladite extrémité aval (24) permettant de former ladite gaine tubulaire, tandis que la jonction desdits deux écoulements forme un joint de ressoudure concentré en additif d'écoulement dans ladite gaine tubulaire, ladite chambre annulaire (18) comprenant en outre des moyens mécaniques (52, 60) pour abaisser la concentration de l'additif d'écoulement dans ledit joint de ressoudure ;
**caractérisée en ce que** lesdits moyens mécaniques comprennent un conduit d'extraction (52) débouchant dans ladite zone de jonction (48), pour pouvoir extraire de ladite zone de jonction (48) une fraction dudit matériau polymère à l'état fondu concentré en additif d'écoulement, par quoi la concentration de l'additif d'écoulement dans ledit joint de ressoudure est abaissée.

2. Tête d'extrusion selon la revendication 1, **caractérisée en ce que** lesdits canaux sont respectivement divisés en un canal amont opposé à ladite extrémité aval et un canal aval situé vers ladite extrémité aval (24'), lesdits canaux amont et aval communiquant l'un avec l'autre.

3. Tête d'extrusion selon la revendication 2, **caractérisée en ce que** lesdits canaux amont et aval, présentent respectivement des sections droites de canal amont et de canal aval, et **en ce que** ladite section droite de canal amont croît de ladite ouverture d'entrée radiale (34') vers ladite zone de jonction (48') opposée, tandis que ladite section droite de canal aval décroît.

4. Tête d'extrusion selon la revendication 2 ou 3, **caractérisée en ce que** ladite zone de jonction (48') présente une portion amont (84) dans laquelle débouchent les canaux amonts et une portion aval (86) dans laquelle débouchent les canaux avals.

5. Tête d'extrusion selon la revendication 4, **caractérisée en ce que** ledit conduit d'extraction (52') débouche dans ladite portion amont (84) de ladite zone de jonction (48').

6. Tête d'extrusion selon l'une quelconque des revendications 1 à 5, **caractérisée en ce que** ladite chambre annulaire (18) comprend un déflecteur (60) situé en amont dudit conduit d'extraction (52) de manière à guider ladite fraction dudit matériau polymère à l'état fondu concentré en additif d'écoulement vers l'intérieur dudit conduit d'extraction (52).

7. Tête d'extrusion selon la revendication 6, **caractérisée en ce que** ledit déflecteur (60) comporte une pièce en V présentant deux ailes opposées (64, 66) bordant ladite zone de jonction (58) et une pointe (62) orientée vers ladite extrémité aval (24), tandis que ledit conduit d'extraction (52) débouche entre lesdites ailes opposées (64, 66).

8. Tête d'extrusion selon la revendication 6 ou 7, **caractérisée en ce que** ladite tête d'extrusion (10) comprend un mandrin (12), et un fourreau (16) venant coiffer coaxialement ledit mandrin (12) pour former ladite chambre annulaire (16) entre ledit fourreau (16) et ledit mandrin (12), et **en ce que** ledit déflecteur (60) s'étend radialement dudit mandrin jusqu'audit fourreau.

9. Tête d'extrusion selon la revendication 8, caractérisée et en ce que lesdits canaux sont formés par des rainures (38, 40) pratiquées dans ledit mandrin (12).

10. Tête d'extrusion selon la revendication 8 ou 9, caractérisée et en ce que ledit conduit d'extraction (52) est ménagé sensiblement radialement dans ledit fourreau (16).

11. Tête d'extrusion selon l'une quelconque des revendications 8 à 10, **caractérisée en ce que** ledit conduit d'extraction (52) est formé d'une fente pratiquée dans ledit fourreau (16).

12. Tête d'extrusion selon l'une quelconque des revendications 1 à 11, **caractérisée en ce que** lesdits canaux (28, 40) convergent l'un vers l'autre et vers ladite extrémité aval (24).

13. Procédé d'extrusion pour former une gaine tubulaire en matériau polymère, ledit procédé comprenant les étapes suivantes :
- on fournit une chambre annulaire (18 ; 18') présentant une extrémité amont (22 ; 22') fermée et une extrémité aval (24 ; 24') ouverte, ladite extrémité amont (22 ; 22') comprenant une ouverture d'entrée radiale (34 ; 34'), ladite chambre annulaire (18 ;18') comprenant deux canaux (38, 40) qui s'étendent dans des sens circulaires opposés à partir de ladite ouverture d'entrée radiale (34 ;34') et une zone de jonction (48 ;48') opposée à ladite ouverture d'entrée radiale dans laquelle se rejoignent lesdits deux canaux ;
- on injecte sous pression à travers ladite ouverture d'entrée radiale un matériau polymère à l'état fondu chargé d'un additif d'écoulement, (38, 40), de manière à former, d'une part deux écoulements circonférentiels de matériau polymère à l'état fondu se rejoignant dans ladite zone de jonction (48 ;48'), tandis que ledit additif d'écoulement se concentre dans ladite zone de jonction, et d'autre part un écoulement axial vers ladite extrémité aval (24 ;24') permettant de former ladite gaine tubulaire, tandis que la jonction desdits deux écoulements forme un joint de ressoudure concentré en additif d'écoulement dans ladite gaine tubulaire ;
**caractérisé en ce qu'**on extrait de ladite zone de jonction (48 ;48') une fraction dudit matériau polymère à l'état fondu concentré en additif d'écoulement, pour abaisser la concentration de l'additif d'écoulement dans ledit joint de ressoudure.

## Patentansprüche

1. Extruderkopf (10) zur Bildung einer rohrförmigen Hülle aus Polymermaterial, wobei der Extruderkopf eine ringförmige Kammer (18) umfasst, die ein geschlossenes stromaufwärtiges Ende (22) und ein offenes stromabwärtiges Ende (24) aufweist, wobei das stromaufwärtige Ende (22) eine radiale Eintrittsöffnung (34) umfasst, um ein Polymermaterial in geschmolzenem Zustand mit Zusatz eines Fließmittels unter Druck einspritzen zu können, wobei die ringförmige Kammer (18) zwei Kanäle (38, 40) umfasst, die sich in entgegengesetzten kreisförmigen Richtungen von der radialen Eintrittsöffnung (34) aus erstrecken, und eine Verbindungszone (48) umfasst, die der radialen Eintrittsöffnung gegenüberliegt und in der die zwei Kanäle (38, 40) zusammentreffen, derart, dass sie einerseits zwei umlaufende Ströme von Polymermaterial in geschmolzenem Zustand bilden, die in der Verbindungszone (48) zusammentreffen, während sich das Fließmittel in der Verbindungszone konzentriert, und andererseits einen axialen Strom zu dem stromabwärtigen Ende (24) hin zur Bildung der rohrförmigen Hülle bilden, während die Verbindung der zwei Ströme eine Fließnaht mit hoher Konzentration an Fließmittel in der rohrförmigen Hülle bildet, wobei die ringförmige Kammer (18) ferner mechanische Mittel (52, 60) umfasst, um die Konzentration des Fließmittels in der Fließnaht zu senken;
**dadurch gekennzeichnet, dass** die mechanischen Mittel eine Extraktionsleitung (52) umfassen, die in der Verbindungszone (48) ausmündet, um aus der Verbindungszone (48) eine Fraktion des Polymermaterials in geschmolzenem Zustand mit hoher Konzentration an Fließmittel extrahieren zu können, wodurch die Konzentration des Fließmittels in der Fließnaht gesenkt wird.

2. Extruderkopf nach Anspruch 1, **dadurch gekennzeichnet, dass** die Kanäle unterteilt sind in einen stromaufwärtigen Kanal, der dem stromabwärtigen Ende gegenüberliegt, bzw. einen stromabwärtigen Kanal, der zu dem stromabwärtigen Ende (24') hin angeordnet ist, wobei der stromaufwärtige Kanal und der stromabwärtige Kanal miteinander kommunizieren.

3. Extruderkopf nach Anspruch 2, **dadurch gekennzeichnet, dass** der stromaufwärtige und stromabwärtige Kanal gerade stromaufwärtige bzw. stromaufwärtige Kanalsektionen aufweisen und dass die gerade stromaufwärtige Kanalsektion von der radialen Eintrittsöffnung (34') zu der gegenüberliegenden Verbindungzone (48') hin ansteigt, während die gerade stromaufwärtige Kanalsektion abfällt.

4. Extruderkopf nach Anspruch 2 oder 3, **dadurch gekennzeichnet, dass** die Verbindungzone (48') einen stromaufwärtigen Teil (84) aufweist, in dem die stromaufwärtigen Kanäle ausmünden, und einen stromabwärtigen Teil (86) aufweist, in dem die stromabwärtigen Kanäle ausmünden.

5. Extruderkopf nach Anspruch 4, **dadurch gekennzeichnet, dass** die Extraktionsleitung (52') in dem stromaufwärtigen Teil (84) der Verbindungszone (48') ausmündet.

6. Extruderkopf nach einem der Ansprüche 1 bis 5, **dadurch gekennzeichnet, dass** die ringförmige Kammer (18) ein Leitelement (60) umfasst, das stromaufwärts der Extraktionsleitung (52) angeordnet ist, derart, dass es die Fraktion des Polymermaterials in geschmolzenem Zustand mit hoher Konzentration an Fließmittel zu dem Inneren der Extraktionsleitung (52) hin leitet.

7. Extruderkopf nach Anspruch 6, **dadurch gekennzeichnet, dass** das Leitelement (60) ein V-förmiges Teil mit zwei gegenüberliegenden Schenkeln (64, 66) aufweist, welche die Verbindungszone (58) säumen, und eine Spitze (62) aufweist, die zu dem stromabwärtigen Ende (24) hin gerichtet ist, während die Extraktionsleitung (52) zwischen den zwei gegenüberliegenden Schenkeln (64, 66) ausmündet.

8. Extruderkopf nach Anspruch 6 oder 7, **dadurch gekennzeichnet, dass** der Extruderkopf (10) einen Dorn (12) und eine Manschette (16) umfasst, die den Dorn (12) koaxial abdeckt, um die ringförmige Kammer (16) zwischen der Manschette (16) und dem Dorn (12) zu bilden, und dass das Leitelement (60) sich radial von dem Dorn bis zu der Manschette hin erstreckt.

9. Extruderkopf nach Anspruch 8, **dadurch gekennzeichnet, dass** die Kanäle von Nuten (38, 40) gebildet sind, die in dem Dorn (12) ausgebildet sind.

10. Extruderkopf nach Anspruch 8 oder 9, **dadurch gekennzeichnet, dass** die Extraktionsleitung (52) im Wesentlichen radial in der Manschette (16) vorgesehen ist.

11. Extruderkopf nach einem der Ansprüche 8 bis 10, **dadurch gekennzeichnet, dass** die Extraktionsleitung (52) von einem Schlitz gebildet ist, der in der Manschette (16) ausgebildet ist.

12. Extruderkopf nach einem der Ansprüche 1 bis 11, **dadurch gekennzeichnet, dass** die Kanäle (28, 40) zueinander und zu dem stromabwärtigen Ende (24) hin konvergieren.

13. Extrusionsverfahren zur Bildung einer rohrförmigen Hülle aus Polymermaterial, wobei das Verfahren die folgenden Schritte umfasst:
- Bereitstellen einer ringförmigen Kammer (18; 18'), die ein geschlossenes stromaufwärtiges Ende (22; 22') und ein offenes stromabwärtiges Ende (24; 24') aufweist, wobei das stromaufwärtige Ende (22; 22') eine radiale Eintrittsöffnung (34; 34') aufweist, wobei die ringförmige Kammer (18; 18') zwei Kanäle (38, 40) umfasst, die sich in entgegengesetzten kreisförmigen Richtungen von der radialen Eintrittsöffnung (34; 34') aus erstrecken, und eine Verbindungszone (48; 48') umfasst, die der radialen Eintrittsöffnung gegenüberliegt und in der die zwei Kanäle zusammentreffen;
- Einspritzen durch die radiale Eintrittsöffnung hindurch eines Polymermaterials in geschmolzenem Zustand mit Zusatz eines Fließmittels (38, 40) unter Druck, derart, dass einerseits zwei umlaufende Ströme von Polymermaterial in geschmolzenem Zustand gebildet werden, die in der Verbindungszone (48; 48') zusammentreffen, während sich das Fließmittel in der Verbindungszone konzentriert, und andererseits ein axialer Strom zu dem stromabwärtigen Ende (24; 24') hin zur Bildung der rohrförmigen Hülle gebildet wird, während die Verbindung der zwei Ströme eine Fließnaht mit hoher Konzentration an Fließmittel in der rohrförmigen Hülle bildet;
**dadurch gekennzeichnet, dass** aus der Verbindungszone (48; 48') eine Fraktion des Polymermaterials in geschmolzenem Zustand mit hoher Konzentration an Fließmittel extrahiert wird, um die Konzentration des Fließmittels in der Fließnaht zu senken.

## Claims

1. An extrusion head (10) for forming a tubular sheath made of polymer material, said extrusion head comprising an annular chamber (18) having a closed upstream end (22) and an open downstream end (24), said upstream end (22) comprising a radial inlet opening (34) so that a polymer material in the molten state loaded with a flow additive can be injected under pressure, said annular chamber (18) comprising two channels (38, 40) which extend in opposite circular directions from said radial inlet opening (34) and a junction zone (48) opposite said radial inlet opening and in which said two channels (38, 40) meet so as to be able to form, on the one hand, two circumferential flows of polymer material in the molten state which meet in said junction zone (48), while said flow additive is concentrated in said junction zone, and, on the other hand, an axial flow toward said downstream end (24) allowing said tubular sheath to form, while the meeting of said two flows forms a welded joint concentrated in flow additive in said tubular sheath, said annular chamber (18) further comprising mechanical means (52, 60) for lowering the flow-additive concentration in said welded joint;
**characterized in that** said mechanical means comprise an extraction duct (52) opening into said junction zone (48) so that a fraction of said polymer material in the molten state concentrated in flow additive can be extracted from said junction zone (48) as a result of which the concentration of flow additive in said welded joint is lowered.

2. The extrusion head as claimed in claim 1, **characterized in that** said channels are respectively divided into an upstream channel opposite said downstream end and a downstream channel situated toward said downstream end (24'), said upstream and downstream channels communicating with one another.

3. The extrusion head as claimed in claim 2, **characterized in that** said upstream and downstream channels respectively have upstream channel and downstream channel cross sections, and **in that** said upstream channel cross section increases from said radial inlet opening (34') toward said junction zone (48') opposite, while said downstream channel cross section decreases.

4. The extrusion head as claimed in claim 2 or 3, **characterized in that** said junction zone (48') has an upstream portion (84) into which the upstream channels open and a downstream portion (86) into which the downstream channels open.

5. The extrusion head as claimed in claim 4, **characterized in that** said extraction duct (52') opens into said upstream portion (84) of said junction zone (48').

6. The extrusion head as claimed in any one of claims 1 to 5, **characterized in that** said annular chamber (18) comprises a deflector (60) situated upstream of said extraction duct (52) so as to guide said fraction of said polymer material in the molten state concentrated in flow additive toward the inside of said extraction duct (52).

7. The extrusion head as claimed in claim 6, **characterized in that** said deflector (60) comprises a V-shaped component having two opposite wings (64, 66) bordering said junction zone (58) and a point (62) oriented toward said downstream end (24), while said extraction duct (52) opens between said opposite wings (64, 66).

8. The extrusion head as claimed in claim 6 or 7, **characterized in that** said extrusion head (10) comprises a mandrel (12) and a barrel (16) which fits coaxially over said mandrel (12) to form said annular chamber (16) between said barrel (16) and said mandrel (12), and **in that** said deflector (60) extends radially from said mandrel as far as said barrel.

9. The extrusion head as claimed in claim 8, **characterized in that** said channels are formed by grooves (38, 40) made in said mandrel (12).

10. The extrusion head as claimed in claim 8 or 9, **characterized in that** said extraction duct (52) is formed substantially radially in said barrel (16).

11. The extrusion head as claimed in any one of claims 8 to 10, **characterized in that** said extraction duct (52) is formed of a slot made in said barrel (16).

12. The extrusion head as claimed in any one of claims 1 to 11, **characterized in that** said channels (28, 40) converge toward one another and toward said downstream end (24).

13. An extrusion method for forming a tubular sheath made of polymer material, said method involving the following steps:
- an annular chamber (18; 18') is provided which has a closed upstream end (22; 22') and an open downstream end (24; 24'), said upstream end (22; 22') having a radial inlet opening (34; 34'), said annular chamber (18; 18') comprising two channels (38, 40) which extend in opposite circular directions from said radial inlet opening (34; 34') and a junction zone (48; 48') opposite said radial inlet opening and in which said two channels meet;
- a polymer material in the molten state loaded with a flow additive (38, 40) is injected under pressure through said radial inlet opening so as to form, on the one hand, two circumferential flows of polymer material in the molten state which meet in said junction zone (48; 48'), while said flow additive concentrates in said junction zone, and, on the other hand, an axial flow toward said downstream end (24; 24') allowing the formation of said tubular sheath, whereas the junction between said two flows forms a welded joint concentrated in flow additive in said tubular sheath;
**characterized in that** a fraction of said polymer material in the molten state concentrated in flow additive is extracted from said junction zone (48; 48') so as to lower the concentration of flow additive in said welded joint.
